# EUROPÄISCHE PATENTANMELDUNG

(11) **EP 4 851 666 A2**
(43) Veröffentlichungstag der Anmeldung: **09.12.2026**
(21) Anmeldenummer: 26173644.1
(22) Anmeldetag: 21.04.2026
(51) Int. Cl.: G01S 7/497

(54) **OPTOELEKTRONISCHER SENSOR ZUM PERIODISCHEN ABTASTEN EINES ÜBERWACHUNGSBEREICHS**

(30) Priorität: 13.05.2025 DE 102025118252
(71) Anmelder: SICK AG, 79183 Waldkirch (DE)
(72) Erfinder: Dr.-Ing. Werber, Armin, 79331 Teningen (DE); Dr. Kohler, Larissa, 79211 Denzlingen (DE)
(74) Vertreter: Manitz Finsterwald Patent- und Rechtsanwaltspartnerschaft mbB

(57) **Zusammenfassung**

Die vorliegende Erfindung betrifft einen optoelektronischen Sensor zum periodischen Abtasten eines Überwachungsbereichs, umfassend eine erste Lichtquelle zum Erzeugen von ersten Sendelichtsignalen, eine der ersten Lichtquelle nachgeordnete Sendeoptik zum Formen der ersten Sendlichtsignale, so dass sich die ersten Sendelichtsignale entlang eines Sendelichtpfads in den Überwachungsbereich ausbreiten, einen ersten Lichtempfänger zum Erfassen von ersten Empfangslichtsignalen, die von einem im Überwachungsbereich anwesenden Objekt durch Remission auftreffender Sendelichtsignale erzeugt werden und sich zwischen dem Objekt und der Empfangsanordnung entlang eines Empfangslichtpfads ausbreiten, wobei der Sendelichtpfad und der Empfangslichtpfad koaxial zueinander verlaufen, eine rotierende Umlenkeinheit, welche zur periodischen Umlenkung zumindest von jeweiligen Teilabschnitten des Sendelichtpfads und des Empfangslichtpfads eingerichtet ist, eine Frontscheibe, welche zwischen der Umlenkeinheit und dem Überwachungsbereich angeordnet ist, eine zweite Lichtquelle, welche zum Erzeugen von zweiten Sendelichtsignalen eingerichtet ist, einen zweiten Lichtempfänger zum Erfassen von zweiten Empfangslichtsignalen, die von einer auf der Frontscheibe vorhandenen Verschmutzung durch Remission auftreffender zweiter Sendelichtsignale erzeugt werden, und eine Auswerteeinheit, welche zum Erfassen von Objekten auf der Grundlage der ersten Lichtsignale und zum Ermitteln eines Maßes einer Verschmutzung der Frontscheibe auf der Grundlage der zweiten Lichtsignale eingerichtet ist. Es ist vorgesehen, dass die zweite Lichtquelle derart benachbart zu der ersten Lichtquelle angeordnet ist, dass die zweiten Sendelichtsignale unmittelbar oder direkt nach einem Formen durch die Sendeoptik oder direkt nach einem Formen durch eine benachbart zu der Sendeoptik angeordnete Zusatzsendeoptik auf die Umlenkeinheit auftreffen und von dieser in Richtung der Frontscheibe umgelenkt werden.

## Beschreibung

Die vorliegende Erfindung betrifft einen optoelektronischen Sensor zum periodischen Abtasten eines Überwachungsbereichs. Der optoelektronische Sensor umfasst eine erste Lichtquelle zum Erzeugen von ersten Sendelichtsignalen, eine der ersten Lichtquelle nachgeordnete Sendeoptik zum Formen der ersten Sendelichtsignale, so dass sich die ersten Sendelichtsignals entlang eines Sendelichtpfads in den Überwachungsbereich ausbreiten, einen ersten Lichtempfänger zum Erfassen von ersten Empfangslichtsignalen, die von einem im Überwachungsbereich anwesenden Objekt durch Remission auftretender Sendelichtsignale erzeugt werden und sich zwischen dem Objekt und dem ersten Lichtempfänger entlang eines Empfangslichtpfads ausbreiten, wobei der Sendelichtpfad und der Empfangslichtpfad koaxial zueinander verlaufen, eine rotierende Umlenkeinheit, welche zur periodischen Umlenkung zumindest von jeweiligen Teilabschnitten des Sendelichtpfads und des Empfangslichtpfads eingerichtet ist, eine Frontscheibe, welche zwischen der Umlenkeinheit und dem Überwachungsbereich angeordnet ist, eine zweite Lichtquelle, welche zum Erzeugen von zweiten Sendelichtsignalen eingerichtet ist, einen zweiten Lichtempfänger zum Erfassen von zweiten Empfangslichtsignalen, die von einer auf der Frontscheibe vorhandenen Verschmutzung durch Remission auftreffender zweiter Sendelichtsignale erzeugt werden, und einer Auswerteeinheit, welche zum Erfassen von Objekten auf der Grundlage der ersten Lichtsignale und zum Ermitteln eines Maßes einer Verschmutzung der Frontscheibe auf der Grundlage der zweiten Lichtsignale eingerichtet ist.

Bei einem derartigen optoelektronischen Sensor kann das von der ersten Lichtquelle, zum Beispiel einem Laserlichtemitter oder dergleichen, erzeugte Sendelicht über die Umlenkeinheit in den Überwachungsbereich gelenkt und von dort von einem gegebenenfalls vorhandenen Objekt remittiert, d.h. diffus oder spiegelnd reflektiert werden. Die ersten Empfangslichtsignale werden von dem Lichtempfänger detektiert und in elektrische Signale umgewandelt. Dem ersten Lichtempfänger kann eine Empfangsoptik vorgeordnet sein, welche die Empfangslichtsignale auf den ersten Lichtempfänger bündelt. Die von der ersten Lichtquelle erzeugten ersten Sendelichtsignale werden mittels der Sendeoptik zu einem Sendelichtbündel geformt, welches mittels der rotierenden Umlenkeinheit periodisch umgelenkt wird und somit ein der Rotationsbewegung entsprechendes, im Überwachungsbereich aufgespanntes Schutzfeld überstreicht. Die von einem dort anwesenden Objekt remittierten ersten Empfangssignale werden wiederum mittels der Umlenkeinheit auf den ersten Lichtempfänger umgelenkt.

Unter dem Begriff "Licht" wird hier nicht nur sichtbare, d.h. für das menschliche Auge sichtbare elektromagnetische Strahlung verstanden, sondern jegliche Form von optischer Strahlung, d.h. insbesondere auch ultraviolettes oder infrarotes Licht, subsummiert.

Ein gattungsgemäßer optoelektronischer Sensor ist zum Beispiel bei einem Laserscanner realisiert. Bei einer Ausgestaltung des optoelektronischen Sensors als abstandsmessender Sensor oder Laserscanner kann zusätzlich zu der Winkellage eines erfassten Objekts im Raum bzw. im Schutzfeld auch dessen Entfernung von dem Sensor ermittelt werden. Die Abstands- bzw. Entfernungsmessung kann z.B. in an sich bekannter Weise nach dem Lichtlaufzeitverfahren oder auch auf der Grundlage einer Phasenverschiebung zwischen den ausgesendeten und empfangenen Lichtsignalen erfolgen. Ein derartiger scannender, abstandsmessender optoelektronischer Sensor wird auch als LIDAR (von Englisch "Light Imaging, Detection and Ranging") bezeichnet.

Die lichtdurchlässige Frontscheibe des optoelektronischen Sensors dient insbesondere dazu, die in der Regel innerhalb eines Gehäuses angeordneten Komponenten des optoelektronischen Sensors gegenüber äußeren Einwirkungen, insbesondere gegen Beschädigung oder Verschmutzung, zu schützen, zugleich aber die Sende- und Empfangslichtsignale durchzulassen. Bei rotierenden Scannern ist die Frontscheibe zum Beispiel eine um die Drehachse im Wesentlichen rotationssymmetrische, für die Lichtsignale transparente Scheibe. Die Stelle, an welcher die ausgesendeten und empfangenen Lichtsignale die Frontscheibe passieren, hängt dabei von der jeweiligen Winkelstellung der Umlenkeinheit ab und ändert sich entsprechend der Rotation der Umlenkeinheit typischerweise kontinuierlich. Da der Strahlquerschnitt des Sendelichtbündels in der Praxis nicht unendlich klein, sondern ausgedehnt ist, umfasst die genannte Stelle der Frontscheibe jeweils einen entsprechend ausgedehnten Bereich der Frontscheibe. Aufgrund der Rotation der Umlenkeinheit passieren die ausgesendeten und empfangenen Lichtsignale verschiedene, fortlaufend überlappende Bereiche der Frontscheibe.

Sowohl die Sendelichtsignale als auch die Empfangslichtsignale können beim Passieren der Frontscheibe durch Verschmutzungen der Frontscheibe beeinträchtigt werden, beispielsweise infolge von Absorption und/oder Streuung an den Verschmutzungen, was zu einer Verfälschung der Empfangssignale, insbesondere zu deren Abschwächung führt. Da hierdurch die Erfassung von Objekten beeinträchtigt oder verfälscht werden kann, ist es insbesondere für sicherheitsrelevante Anwendungen notwendig, die optische Durchlässigkeit der Frontscheibe sicherzustellen. Es ist daher zweckmäßig, die Frontscheibe vorzugsweise automatisiert und insbesondere auch während des laufenden Überwachungsbetriebs auf Verschmutzungen überprüfen zu können.

Eine Überprüfung der Frontscheibe auf Verschmutzung kann insbesondere dadurch erfolgen, dass die Frontscheibe mit einer Prüfstrahlung beleuchtet wird. Trifft diese Prüfstrahlung auf Verschmutzungen der Frontscheibe, wird ein Teil der Prüfstrahlung remittiert. Aufgrund der remittierten Prüfstrahlung kann die Anwesenheit von Verschmutzungen auf der Frontscheibe ortsaufgelöst erfasst werden.

Dieses Aussenden der Prüfstrahlung und das Erfassen von gegebenenfalls remittierter Prüfstrahlung erfolgt mittels der zweiten Lichtquelle und des zweiten Lichtempfängers.

Somit werden die erste Lichtquelle und der erste Lichtempfänger ausschließlich zur Objekterfassung betrieben, während die zweite Lichtquelle und der zweite Lichtempfänger ausschließlich zur Verschmutzungsdetektion verwendet werden.

Ein gattungsgemäßer optoelektronischer Sensor ist beispielsweise in DE 196 52 440 A1 offenbart. Die Umlenkeinheit dieses Sensors umfasst einen rotierenden Drehspiegel, welcher zwei einander gegenüberliegende reflektierende Spiegelflächen aufweist. Die Lichtquelle und der Lichtempfänger, welche zur Objekterfassung vorgesehen sind, sind auf der einen Seite des Drehspiegels angeordnet, während die Lichtquelle und der Lichtempfänger, welche zur Detektion von Verschmutzungen der Frontscheibe vorgesehen sind, auf der anderen, gegenüberliegenden Seite des Drehspiegels angeordnet sind. Ein Nachteil dieser Anordnung besteht aufgrund der entfernten Anordnung der beiden jeweiligen Kombinationen aus Lichtquelle und Lichtempfänger auf gegenüberliegenden Seiten des Drehspiegels, der sich in einem hohen Platzbedarf niederschlägt.

Ein weiterer gattungsgemäßer optoelektronischer Sensor ist aus DE 197 07 418 C2 bekannt. Dieser Sensor weist eine Lichtquelle und einen Lichtempfänger in Koaxialanordnung auf, wobei der Sendelichtpfad und der Empfangslichtpfad mittels eines Drehspiegels periodisch umgelenkt wird. Außerhalb dieses kombinierten Sende- und Empfangslichtpfads ist ein Lichttaster angeordnet, welcher zum Aussenden und Empfangen von Prüfstrahlung zur Detektion von Verschmutzungen der Frontscheibe eingerichtet ist. Die Prüfstrahlung wird mittels eines zusätzlichen Schwenkspiegels in den eigentlichen Sende- und Empfangslichtpfad ein- bzw. ausgekoppelt. Die dort gezeigte Lösung zur Verschmutzungsüberwachung erfordert neben einer hohen Anzahl an Zusatzkomponenten einen erhöhten Bedarf an Bauraum.

Die gattungsähnliche EP 2 927 711 B1 zeigt in einem Ausführungsbeispiel einen Laserscanner, bei dem zur Funktionsüberwachung ein Testlichtsender vorgesehen ist, wobei die von diesem Testlichtsender emittierten Testlichtsignale zusätzlich an der Innenseite der Frontscheibe reflektiert werden, um eine Detektion von Verschmutzungen zu ermöglichen. Die Testlichtsignale werden von demselben Lichtempfänger empfangen, welcher auch zur Detektion der von einem erfassten Objekt remittierten Empfangssignale vorgesehen ist.

Bei anderen bekannten Systemen zur Detektion von Verschmutzungen der Frontscheibe sind Messeinrichtungen vorgesehen, welche eine Vielzahl von Messkanälen mit einer entsprechenden Anzahl von LEDs und Fotodioden aufweisen. Die LEDs durchstrahlen die Frontscheibe an festen Messstellen, um das Licht anschließend über Spiegel oder Reflektoren auf die Fotodioden umzulenken. Diese Fotodioden messen den Transmissionsverlust der Frontscheibe, welcher dann mit einem eingelernten Wert in einen nicht kontaminierten Zustand verglichen wird. Da nur bestimmte Stellen der Frontscheibe durchstrahlt und somit überwacht werden, existieren auch nicht-durchstrahlte Bereiche der Frontscheibe. Es muss daher sichergestellt werden, dass relevante Verschmutzungen dennoch sicher erkannt werden. Hierdurch steigt die Komplexität, wobei sich insbesondere unterschiedliche Abstrahlwinkel und Abstrahlintensitätsprobleme sowie Änderungen der Abstrahlcharakteristiken der LEDs bei Temperaturänderungen negativ auswirken. Zusätzliche Spiegel, die in der Regel zur Strahlführung nötig sind, erhöhen die Komplexität weiter. Aufgrund der spezifischen Anforderungen an die Abstrahlcharakteristiken der verwendeten LEDs können sich zum Beispiel Schwierigkeiten bei einer Produktionseinstellung von solchen Bauteilen ergeben, geeignete Ersatzbauteile aufzufinden, was zu zeitlichen Verzögerungen und zusätzlichen Kosten führt. Zudem ist durch die Vielzahl von zusätzlichen Bauelementen zur Verschmutzungsüberwachung der Platzbedarf in nachteiliger Weise erhöht.

Es ist die Aufgabe der Erfindung, einen optoelektronischen Sensor der eingangs genannten Art anzugeben, welcher eine kompakte Bauweise aufweist und eine vergleichsweise geringe Anzahl an zusätzlichen Komponenten für eine Detektion von Verschmutzungen der Frontscheibe benötigt.

Die Lösung der Aufgabe erfolgt durch die Merkmale des Anspruchs 1. Erfindungsgemäß ist vorgesehen, dass die zweite Lichtquelle derart benachbart zu der ersten Lichtquelle angeordnet ist, dass die zweiten Sendelichtsignale unmittelbar oder direkt nach einem Formen durch die Sendeoptik oder direkt nach einem Formen durch eine benachbart zu der Sendeoptik angeordnete Zusatzsendeoptik auf die Umlenkeinheit auftreffen und von dieser in Richtung der Frontscheibe umgelenkt werden. "Nach einem Formen" bedeutet hier nach einer Formung durch die entsprechende Sendeoptik oder ein anderes strahlformendes Element. Die Umlenkeinheit kann einen Umlenkspiegel oder ein Umlenkprisma umfassen. Der Umlenkwinkel kann beispielsweise 90° betragen. Insbesondere kann die Umlenkeinheit nur eine einzige reflektierende Fläche aufweisen. Die Auswerteeinheit kann auf der Grundlage der zweiten Lichtsignale das Vorhandensein und insbesondere auch das Maß der Verschmutzungen ermitteln.

Bei den zu ermittelnden Verschmutzungen kann es sich beispielsweise um Fremdkörper wie Staubpartikel oder auch Wassertropfen handeln. Im weiteren Sinne werden unter Verschmutzungen aber auch Beschädigungen der Frontscheibe wie Risse, Kratzer oder Krater verstanden.

Unter dem unmittelbaren Auftreffen der zweiten Sendelichtsignale auf die Umlenkeinheit wird insbesondere eine Strahlausbreitung der Sendelichtsignale zwischen der zweiten Lichtquelle und der Umlenkeinheit ohne ein Formen der zweiten Sendelichtsignale durch eine Optik oder ein sonstiges strahlformendes Element und ohne ein zwischenzeitliches weiteres Umlenken verstanden. Das direkte Auftreffen der zweiten Sendelichtsignale auf die Umlenkeinheit nach einem Formen durch die Sendeoptik bzw. durch eine Zusatzsendeoptik ist insbesondere so zu verstehen, dass nach dem Formen keine weitere Umlenkung durch zusätzlich zur Umlenkeinheit vorgesehene Umlenkmittel erfolgt. Aus der erfindungsgemäßen benachbarten Anordnung der ersten und der zweiten Lichtquelle ergibt sich insbesondere, dass sowohl die ersten als auch die zweiten Sendelichtsignale von derselben reflektierenden Fläche oder Seite der Umlenkeinheit reflektiert werden.

Ein Vorteil des erfindungsgemäßen optoelektronischen Sensors besteht in der Notwendigkeit nur einer zweiten Lichtquelle für die Verschmutzungsdetektion. Ein weiterer Vorteil ergibt sich aus der Anordnung der zweiten Lichtquelle nahe der optischen Achse des Sendelichtpfads der ersten Sendelichtsignale und der ersten Lichtquelle. Hierdurch vereinfacht sich der konstruktive Aufwand. Zusätzliche Bauteile, wie beispielsweise weitere Umlenkspiegel, sind verzichtbar, wodurch sich der Fertigungsaufwand verringert.

Bei optoelektronischen Sensoren wird in der Regel zwischen sicheren und nichtsicheren Sensoren unterschieden, wobei sichere Sensoren erhöhte regulatorische Anforderungen bezüglich der Ausfall- und Fehlersicherheit erfüllen müssen, damit diese zum Schutz von Personen eingesetzt werden können. Zu diesen Anforderungen gehört auch die vorstehend beschriebene Verschmutzungsdetektion. Die vorliegende Erfindung ermöglicht es, herkömmliche nicht-sichere Sensoren, bei denen eine Verschmutzungsdetektion ursprünglich nicht vorgesehen war, zu einem kostengünstigen sicheren Sensor mit vergleichsweise geringem Aufwand umzukonstruieren. Hierfür werden der Anordnung insbesondere die zweite Lichtquelle und der zweite Lichtempfänger hinzugefügt. Dieses Hinzufügen kann ggf. auch in Form einer Nachrüstlösung verwirklicht werden, so dass ein bereits vorhandener nicht-sicherer Sensor mit vergleichsweise geringem Aufwand zu einem sicheren Sensor umgebaut werden kann.

Gemäß einer bevorzugten Ausführungsform sind die erste und die zweite Lichtquelle zumindest in einer Querrichtung bezüglich einer Hauptachse der Sendeoptik voneinander beabstandet angeordnet. Der konkrete Abstand hängt im Prinzip nur von der bauartbedingten lateralen Ausdehnung der beiden Lichtquellen ab. Prinzipiell können die beiden Lichtquellen unmittelbar aneinander anstoßend oder mit einem geringen (seitlichen) Abstand im Bereich weniger Millimeter oder sogar im Sub-Millimeterbereich positioniert werden.

Gemäß einer weiteren bevorzugten Ausführungsform sind die erste Lichtquelle und die zweite Lichtquelle bezüglich der Hauptachse der Sendeoptik zusätzlich auch in einer Längsrichtung voneinander beabstandet angeordnet. Durch den zusätzlichen Längsversatz kann z.B. für die zweiten Sendelichtsignale ein anderer Fokuspunkt als für die ersten Sendelichtsignale definiert werden, welcher sich beispielsweise auf oder nahe der Frontscheibe befindet, während die ersten Sendelichtsignale auf unendlich oder einen sich innerhalb des Überwachungsbereichs befindenden Arbeitspunkt fokussiert sind. Dieser Vorteil zeigt sich insbesondere bei der Verwendung einer gemeinsamen Sendeoptik für die ersten und zweiten Sendelichtsignale, kann aber auch bei der Verwendung einer separaten Zusatzsendeoptik oder bei einer direkten Ausleuchtung der Frontscheibe ohne eine Sendeoptik für die zweiten Sendelichtsignale von Vorteil sein.

Gemäß einer weiteren bevorzugten Ausführungsform ist die erste Lichtquelle auf der Hauptachse der Sendeoptik angeordnet. Daraus ergibt sich, dass die zweite Lichtquelle außeraxial, d.h. von der Hauptachse der Sendeoptik beabstandet angeordnet ist. Durch die Anordnung der ersten Lichtquelle auf der Hauptachse wird ein koaxialer Strahlengang im Objekterfassungslichtpfad verwirklicht.

Gemäß einer weiteren bevorzugten Ausführungsform weisen die ersten Sendelichtsignale eine erste Wellenlänge und die zweiten Sendelichtsignale eine zweite, von der ersten Wellenlänge verschiedene Wellenlänge auf, wobei dem ersten Lichtempfänger ein erster Filter vorgeordnet ist, welcher im Wesentlichen nur Licht mit der ersten Wellenlänge passieren lässt, und dem zweiten Lichtempfänger ein zweiter Filter vorgeordnet ist, welcher im Wesentlichen nur Licht mit der zweiten Wellenlänge passieren lässt. Vorteilhafterweise sind der erste und/oder der zweite Filter als Bandpassfilter ausgebildet. Die Ausdrücke "im Wesentlichen" sind hierbei so zu verstehen, dass grundsätzlich auch andere Filter anstelle der Bandpassfilter verwendet werden können, beispielsweise Hoch- oder Tiefpassfilter, wobei die Wellenlängen der Lichtquellen und die Filtercharakteristiken des ersten und zweiten Filters so aufeinander abgestimmt sind, dass der erste Filter kein Licht mit der zweiten Wellenlänge passieren lässt und der zweite Filter kein Licht mit der ersten Wellenlänge passieren lässt. Durch diese bevorzugte Ausführungsform wird sichergestellt, dass der erste Lichtempfänger nur die ersten Empfangssignale empfängt und der zweite Lichtempfänger nur die zweiten Empfangssignale empfängt, so dass die Objekterfassung und die Verschmutzungsdetektion trotz der zumindest teilweise überlappenden Strahlengänge optisch voneinander getrennt werden können.

Gemäß einer weiteren bevorzugten Ausführungsform ist ein Fremdlichtempfänger vorgesehen, welcher dazu eingerichtet ist, Lichtsignale aus Richtung des Überwachungsbereichs und/oder der Frontscheibe zu empfangen, wobei dem Fremdlichtempfänger ein dritter Filter vorgeordnet ist, welcher Licht mit der ersten und zweiten Wellenlänge nicht passieren lässt. Hierdurch ist eine Erkennung der Anwesenheit von breitbandigem Störlicht oder Fremdlicht möglich, welches die von dem ersten und/oder dem zweiten Lichtempfänger erfassten Empfangssignale verfälschen könnte. Der dritte Filter lässt hierfür insbesondere Licht einer dritten Wellenlänge bzw. eines die erste und die zweite Wellenlänge nicht umfassenden Wellenbereichs passieren. Vorteilhafterweise ist der dritte Filter ebenfalls als Bandpassfilter ausgebildet, kann jedoch unter Berücksichtigung der definierten Bedingungen bezüglich der durchgelassenen und blockierten Wellenlängen auch als Hoch- oder Tiefpassfilter ausgebildet sein. Der Fremdlichtempfänger ist bevorzugt benachbart zu dem zweiten Lichtempfänger angeordnet. Hierdurch ist sichergestellt, dass etwaige Fremd- oder Störlichtsignale zuverlässig empfangen werden. Insbesondere ermöglicht die nahe Anordnung des Fremdlichtempfängers zum zweiten Lichtempfänger auch eine Lokalisation einer gegebenenfalls vorhandenen Fremd- oder Störlichtquelle. Hierfür kann der Fremdlichtempfänger in ein oder zwei Dimensionen ortsauflösend ausgebildet sein.

Gemäß einer weiteren bevorzugten Ausführungsform sind der erste und/oder der zweite Lichtempfänger in der Ausbreitungsrichtung der ersten und/oder zweiten Empfangslichtsignale betrachtet hinter der ersten und der zweiten Lichtquelle angeordnet. Durch diese Ausgestaltung kann die vorstehend erwähnte koaxiale Ausgestaltung der Sende- und Empfangslichtpfade verwirklicht werden. Hierbei wird ausgenutzt, dass der oder die Lichtquellen in der Regel eine wesentlich kleinere laterale Ausdehnung haben als die Lichtempfänger. Die Empfangslichtsignale passieren die jeweilige Lichtquelle auf ihrem Weg zum entsprechenden Lichtempfänger, wobei eine geringfügige Abschattung durch die Lichtquelle(n) in Kauf genommen werden kann.

Gemäß einer weiteren bevorzugten Ausführungsform ist in der Ausbreitungsrichtung der ersten und/oder der zweiten Empfangslichtsignale betrachtet hinter der Umlenkeinheit eine Empfangsoptik angeordnet, welche dazu eingerichtet ist, die ersten und die zweiten Empfangslichtsignale zu formen. Die Empfangsoptik bildet somit eine gemeinsame Empfangsoptik für beide Empfangssignale und kann als Einzellinse, Linsenanordnung, diffraktives optisches Element, Freiformlinse oder dergleichen ausgestaltet sein.

Gemäß einer weiteren bevorzugten Ausführungsform ist die Empfangsoptik in der Ausbreitungsrichtung der ersten und/oder zweiten Empfangslichtsignale betrachtet hinter der ersten und zweiten Lichtquelle angeordnet. Somit werden durch die Empfangsoptik lediglich die Empfangslichtsignale, nicht jedoch die Sendelichtsignale geformt. Bevorzugt liegt die gemeinsame Empfangsoptik in der Ausbreitungsrichtung der ersten und/oder zweiten Empfangslichtsignale betrachtet vor dem zweiten Lichtempfänger.

Gemäß einer weiteren bevorzugten Ausführungsform ist in der Ausbreitungsrichtung der ersten und/oder zweiten Empfangslichtsignale betrachtet hinter der Empfangsoptik und hinter dem zweiten Lichtempfänger ein Faltspiegel angeordnet, so dass ein Teil der von der Empfangsoptik geformten ersten und zweiten Empfangslichtsignale auf den zweiten Lichtempfänger treffen und ein anderer Teil auf den Faltspiegel treffen und von diesem in Richtung auf den ersten Lichtempfänger umgelenkt werden. Die von dem Faltspiegel umgelenkten Empfangssignale passieren die Empfangsoptik somit ein zweites Mal. Die gegebenenfalls dadurch bedingte erneute Formung der der Empfangssignale kann dabei in Kauf genommen werden oder sogar erwünscht sein, um den unterschiedlichen Entfernungen derjenigen Orte, an denen die ersten und die zweiten Empfangslichtsignale erzeugt werden, Rechnung zu tragen. Die Empfangsoptik kann beispielsweise als eine Art Ringlinse ausgebildet sein, wobei der Bereich, in dem die auf den ersten Lichtempfänger umgelenkten Empfangssignale die Empfangsoptik ein zweites Mal passieren, als Hohlraum ausgebildet sein kann oder auch eine andere Brennweite als der übrige ringförmige Bereich aufweisen kann. Der Faltspiegel kann plan oder auch konvex oder konkav gewölbt sein.

Gemäß einer Abwandlung können der erste und der zweite Lichtempfänger bezüglich ihrer jeweiligen Funktionalität vertauscht werden. Dies ist so zu verstehen, dass der zweite Lichtempfänger an der ursprünglichen Position des ersten Lichtempfängers und der erste Lichtempfänger an der ursprünglichen Position des zweiten Lichtempfängers angeordnet werden kann.

Gemäß einer weiteren bevorzugten Ausführungsform sind der erste und der zweite Lichtempfänger auf der Hauptachse der Empfangsoptik angeordnet. Somit wird auch im Empfangsabschnitt des optoelektronischen Sensors eine koaxiale Anordnung sowohl für die Verschmutzungsdetektion als auch für die Objekterfassung verwirklicht.

Gemäß einer weiteren bevorzugten Ausführungsform ist dem zweiten Lichtempfänger eine Zusatzempfangsoptik vorgeordnet. Durch diese Zusatzempfangsoptik kann eine geeignete Anpassung der für die zweiten Empfangslichtsignale wirksamen Gesamtbrennweite erfolgen.

Gemäß einer weiteren bevorzugten Ausführungsform sind der erste und/oder der zweite Lichtempfänger in einer oder in zwei Dimensionen ortsauflösend ausgebildet. Dementsprechend können der erste und/oder der zweite Lichtempfänger als Zeilen- bzw. Matrixlichtempfänger ausgebildet sein. Hierdurch kann eine Ortsbestimmung der erfassten Objekte bzw. der detektierten Verschmutzungen verbessert werden, insbesondere zusätzlich zu der Ortsbestimmung, die aufgrund einer Detektion der Drehwinkelposition der rotierenden Umlenkeinheit möglich ist. So kann z.B. zusätzlich zu dem sich aus der Drehwinkelposition ergebenden Azimutwinkel einer Objekt- oder Verschmutzungsposition auch deren Höhenwinkel oder Elevation ermittelt werden.

Gemäß einer weiteren bevorzugten Ausführungsform ist auf der Frontscheibe zumindest ein Prüfkörper angeordnet. Der oder die Prüfkörper dienen einer Funktionskontrolle der Verschmutzungsdetektion. Die Position des Prüfkörpers kann in der Auswerteeinheit hinterlegt sein.

Gemäß einer weiteren bevorzugten Ausführungsform ist die Auswerteeinheit dazu eingerichtet, eine Entfernung des erfassten Objekts von dem optoelektronischen Sensor in Abhängigkeit von der Lichtlaufzeit der ausgesendeten und empfangenen ersten Lichtsignale zu ermitteln. Die Auswerteeinheit kann hierzu sinnvollerweise mit der ersten Lichtquelle verbunden sein, um den Zeitpunkt der Erzeugung der Sendelichtsignale zu steuern. Der optoelektronische Sensor ist somit als LIDAR ausgestaltet, wobei die Entfernungsmessung bevorzugt nach dem TOF-Prinzip erfolgt (TOF abgekürzt für Englisch "Time of Flight"). Die ersten Sendelichtsignale können hierfür in gepulster Form ausgesendet werden.

Weitere Vorteile des erfindungsgemäßen optoelektronischen Sensors ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird diese Merkmale zweckmäßigerweise auch einzeln betrachten und zu sinnvollen weiteren Kombinationen zusammenfassen.

Es zeigen:
- Fig. 1: eine schematische Schnittdarstellung eines optoelektronischen Sensors gemäß ersten Ausführungsbeispiel; und
- Fig. 2: eine schematische Schnittdarstellung eines optoelektronischen Sensors gemäß einem zweiten Ausführungsbeispiel.

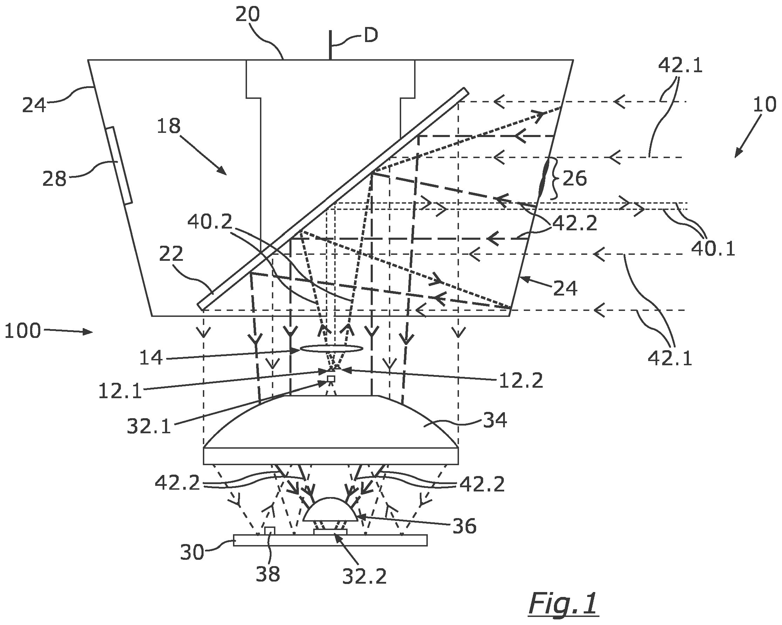

Fig. 1 zeigt einen optoelektronischen Sensor 100 gemäß einem ersten Ausführungsbeispiel, welcher zum Erfassen von Objekten (nicht dargestellt) in einem Überwachungsbereich 10 eingerichtet ist. Der optoelektronische Sensor 100 umfasst eine erste Lichtquelle 12.1 zum Erzeugen von ersten Sendelichtsignalen und eine der ersten Lichtquelle 12.1 nachgeordnete Sendeoptik 14 zum Formen der ersten Sendelichtsignale. Die erste Lichtquelle 12.1 befindet sich auf der optischen Achse der Sendeoptik 14.

Seitlich beabstandet zu der ersten Lichtquelle 12.1 ist eine zweite Lichtquelle 12.2 zum Erzeugen von zweiten Sendelichtsignalen angeordnet, deren Abstand zur Sendeoptik 14 längs deren optischer Achse etwas kleiner ist als der Längsabstand der ersten Lichtquelle 12.1 zur Sendeoptik 14. Die Lichtquellen 12.1, 12.2 können z.B. als Laserdioden, LEDs oder Oberflächenemitter (VCSEL) ausgebildet sein.

Die ersten und zweiten Sendelichtsignale werden in Fig. 1 schematisch durch korrespondierende erste bzw. zweite Sendelichtstrahlen 40.1, 40.2 repräsentiert.

Die Sendelichtsignale bzw. Sendelichtstrahlen 40.1, 40.2 werden von einem Umlenkspiegel 22 einer rotierenden Umlenkeinheit 18 um 90° umgelenkt. Die Umlenkeinheit 18 umfasst einen motorischen Antrieb 20, welcher den an dem Antrieb 20 angeordneten Umlenkspiegel 22 kontinuierlich um eine Drehachse D rotiert, wobei der Umlenkspiegel 22 um einen Winkel von 45° zur Drehachse D geneigt ist. Es versteht sich, dass die Umlenkeinheit 18 anstelle einer kontinuierlichen Rotation um einen Winkel von 360° auch eine hin- und hergehende Rotationsbewegung oder Schwenkbewegung ausführen kann, welche sich über einen Winkel von weniger als 360° erstreckt, beispielsweise 270° oder 180°.

Die Sendelichtstrahlen 40.1, 40.2 treffen auf eine lichtdurchlässige umlaufende Frontscheibe 24 und treten zumindest zu einem Großteil durch diese hindurch.

Treffen die ersten Sendelichtsignale bzw. Sendelichtstrahlen 40.1 auf ein gegebenenfalls im Überwachungsbereich 10 vorhandenes Objekt, so werden diese von der Oberfläche des Objekts remittiert und zumindest zum Teil in Form von ersten Empfangslichtsignalen in Richtung des optoelektronischen Sensors 100 remittiert.

Treffen die Sendelichtstrahlen 40.2 auf gegebenenfalls auf der Frontscheibe 24 vorhandene Verschmutzungen, beispielsweise Schmutzpartikel oder auch Beschädigungen wie Kratzer oder Risse in der Frontscheibe 24, so werden die Sendelichtsignale zumindest teilweise durch diese Verschmutzungen 26 in Form von zweiten Empfangslichtsignalen zurückgestreut.

Die ersten bzw. zweiten Empfangslichtsignale sind in Fig. 1 schematisch in Form von entsprechenden Empfangslichtstrahlen 42.1, 42.2 dargestellt.

Die Empfangslichtsignale bzw. Empfangslichtstrahlen 42.1, 42.2 treffen auf den Umlenkspiegel 22 und werden von diesem um 90° umgelenkt und treffen anschließend auf eine Empfangsoptik 34, welche in Ausbreitungsrichtung der Empfangslichtstrahlen 42.1, 42.2 betrachtet hinter den Lichtquellen 12.1, 12.2 angeordnet ist. Die Empfangsoptik 34 formt bzw. bündelt die Empfangslichtstrahlen 42.1, 42.2 in Richtung auf einen Faltspiegel 30, welcher in Ausbreitungsrichtung der Empfangslichtstrahlen 42.1, 42.2 betrachtet hinter der Empfangsoptik 34 angeordnet ist.

Der optoelektronische Sensor 100 umfasst einen ersten Lichtempfänger 32.1, welcher zwischen den Lichtquellen 12.1, 12.2 und der Empfangsoptik 34 derart angeordnet ist, dass eine lichtempfindliche Fläche des ersten Lichtempfängers 32.1 der Umlenkeinheit 18 abgewandt ist. Weiterhin umfasst der optoelektronische Sensor 100 einen zweiten Lichtempfänger 32.2, welcher dem Faltspiegel 30 derart vorgeordnet ist, dass eine lichtempfindliche Fläche des zweiten Lichtempfängers 32.2 der Umlenkeinheit 18 zugewandt ist. Dem zweiten Lichtempfänger 32.2 ist eine Zusatzempfangsoptik 36 vorgeordnet, welche eine weitere Formung der Empfangslichtstrahlen 42.2 bewirkt.

Somit wird ein Teil der Empfangslichtstrahlen 42.1, 42.2 zu dem ersten Lichtempfänger 32.1 und ein anderer Teil der Empfangslichtstrahlen 42.1, 42.2 zu dem zweiten Lichtempfänger 32.2 gelenkt. Der erste und/oder der zweite Lichtempfänger 32.1, 32.2 sind bevorzugt in einer oder in zwei Dimensionen ortsauflösend ausgebildet.

Die erste Lichtquelle 12.1 und die zweite Lichtquelle 12.2 können sich hinsichtlich der Wellenlängen der emittierten Sendelichtsignale voneinander unterscheiden. Beispielsweise kann die erste Lichtquelle 12.1 Sendelichtsignale mit einer ersten Wellenlänge emittieren, welche beispielsweise 905 nm oder 850 nm beträgt. Die von der zweiten Lichtquelle 12.2 emittierten Sendelichtsignale können eine zweite Wellenlänge aufweisen, welche beispielsweise 540 nm beträgt. Grundsätzlich können die Wellenlängen frei gewählt werden. Es hat sich jedoch als vorteilhaft erwiesen, wenn die von der zweiten Lichtquelle 12.2 emittierten zweiten Sendelichtsignale, die zur Verschmutzungsdetektion herangezogen werden, eine vergleichsweise kürzere Wellenlänge aufweisen, als die von der ersten Lichtquelle 12.1 emittierten, zur Objekterfassung herangezogenen ersten Sendelichtsignale. Da der Streuquerschnitt in Abhängigkeit von der Wellenlänge λ gemäß proportional zu 1/λ⁴ ist und somit der Anteil an gestreutem Licht zu kürzeren Wellenlängen hin zunimmt, bewirken auf der Frontscheibe 24 vorhandene Verschmutzungen 26 für kürzere Wellenlängen eine vergleichsweise höhere Rückstreuung als bei längeren Wellenlängen, so dass durch vergleichsweise kurzwellige zweite Sendelichtsignale die Effektivität der Verschmutzungsdetektion erhöht wird.

Dem ersten und dem zweiten Lichtempfänger 32.1, 32.2 sind jeweilige Filter, zum Beispiel Bandpassfilter (nicht dargestellt), vorgeordnet, welche auf die Emissionswellenlängen der Lichtquellen 12.1, 12.2 derart abgestimmt sind, dass von dem ersten Lichtempfänger 32.1 nur Licht mit der ersten Wellenlänge (z.B. 905 nm oder 850 nm) und von dem zweiten Lichtempfänger 32.2 nur Licht mit der zweiten Wellenlänge (z.B. 450 nm) empfangen wird.

Auch wenn prinzipiell sowohl die ersten als auch die zweiten Sendelichtsignale von den Verschmutzungen 26 zurückgestreut werden, werden durch die vorstehend beschriebene Wellenlängenselektion lediglich die durch die Empfangslichtstrahlen 42.2 repräsentierten zweiten Empfangslichtsignale, welche auf die Streuung der zweiten Sendelichtsignale bzw. Sendelichtstrahlen 40.2 zurückgehen, für die Verschmutzungsdetektion berücksichtigt. Zugleich verhindert die Wellenlängenselektion, dass die zweiten Empfangslichtsignale von dem für die Objekterfassung vorgesehenen ersten Lichtempfänger 32.1 erfasst werden.

Der optoelektronische Sensor 100 kann ferner einen Fremdlichtempfänger 38 umfassen, welcher beispielsweise benachbart zu dem zweiten Lichtempfänger 32.2 angeordnet sein kann. Im Ausführungsbeispiel von Fig. 1 ist der Fremdlichtempfänger 38 unmittelbar vor der reflektierenden Fläche des Faltspiegels 30 angeordnet. Dem Fremdlichtempfänger 38 ist ein Filter (nicht dargestellt) vorgeordnet, welcher Licht einer dritten Wellenlänge (z.B. 630 nm) bzw. eines Wellenlängenbereichs passieren lässt, jedoch Licht der ersten und zweiten Wellenlänge blockiert. Falls Störlicht oder Fremdlicht von einer externen Lichtquelle in den optoelektronischen Sensor 100 gelangt, erhöhen sich sowohl die vom ersten als auch vom zweiten Lichtempfänger 12.1, 12.2 erfassten Empfangssignale und können eine Fehlerfassung bzw. -detektion verursachen. Da der Fremdlichtempfänger 38 nur auf derartige breitbandige Fremd- bzw. Störlichtsignale reagiert, aufgrund der Filterung jedoch nicht auf Empfangslichtsignale mit der ersten oder zweiten Wellenlänge, ist eine zuverlässige Detektion von unerwünschtem Fremd- bzw. Störlicht möglich.

Auf der Frontscheibe 24 können ein oder mehrere Prüfkörper 28 angeordnet sein. Diese weisen vorteilhafterweise definierte Remissionseigenschaften auf und dienen einer Funktionskontrolle für die auf den zweiten Sende- bzw. Empfangslichtsignalen basierende Verschmutzungsdetektion. Da die Position des oder der Prüfkörper 28 bekannt ist, können die entsprechenden Empfangslichtsignale von solchen Empfangslichtsignalen unterschieden werden, die auf tatsächlich vorhandene Verschmutzungen 26 zurückzuführen sind.

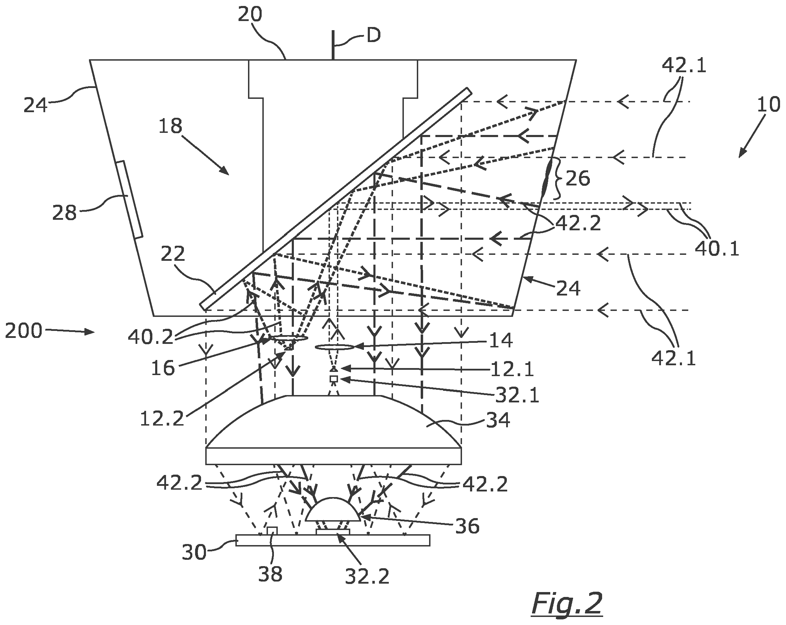

Mit Bezug auf Fig. 2 wird ein optoelektronischer Sensor 200 gemäß einem zweiten Ausführungsbeispiel beschrieben. Da der Aufbau und die Funktionsweise in wesentlichen Teilen dem optoelektronischen Sensor 100 von Fig. 1 entspricht, wird nachfolgend nur auf die wesentlichen Unterschiede eingegangen.

Im Unterschied zum Ausführungsbeispiel von Fig. 1 ist der die zweite Lichtquelle 12.2 sowohl in lateraler als auch in axialer Richtung weiter von der ersten Lichtquelle 12.1 bzw. der optischen Achse der Sendeoptik 14 beabstandet. Der zweiten Lichtquelle 12.2 ist eine Zusatzsendeoptik 16 vorgeordnet, welche die zweiten Sendelichtsignale formt. Eine Formung der zweiten Sendelichtsignale durch die Sendeoptik 14 erfolgt nicht. Dadurch ist eine bessere Abstimmung des Öffnungswinkels der zweiten Sendelichtstrahlen 40.2 möglich.

Gemäß einer Abwandlung des Ausführungsbeispiels von Fig. 2 kann die Zusatzsendeoptik 16 auch entfallen, sofern die zweite Lichtquelle 12.2 eine geeignete Abstrahlcharakteristik aufweist. Bei dieser Abwandlung treffen die Sendelichtsignale somit direkt, d.h. ohne weitere Strahlformung auf den Umlenkspiegel 22.

### Bezugszeichenliste

- 100, 200: optoelektronischer Sensor
- 10: Überwachungsbereich
- 12.1, 12.2: Lichtquelle
- 14: Sendeoptik
- 16: Zusatzsendeoptik
- 18: Umlenkeinheit
- 20: Antrieb
- 22: Umlenkspiegel
- 24: Frontscheibe
- 26: Verschmutzung
- 28: Prüfkörper
- 30: Faltspiegel
- 32.1, 32.2: Lichtempfänger
- 34: Empfangsoptik
- 36: Zusatzempfangsoptik
- 38: Fremdlichtempfänger
- 40.1, 40.2: Sendelichtstrahlen
- 42.1, 42.2: Empfangslichtstrahlen

- D: Drehachse

## Patentansprüche

1. Optoelektronischer Sensor (100, 200) zum periodischen optischen Abtasten eines Überwachungsbereichs (10), umfassend
eine erste Lichtquelle (12.1) zum Erzeugen von ersten Sendelichtsignalen, eine der ersten Lichtquelle (12.1) nachgeordnete Sendeoptik (14) zum Formen der ersten Sendlichtsignale, so dass sich die ersten Sendelichtsignale entlang eines Sendelichtpfads in den Überwachungsbereich (10) ausbreiten,
einen ersten Lichtempfänger (32.1) zum Erfassen von ersten Empfangslichtsignalen, die von einem im Überwachungsbereich (10) anwesenden Objekt durch Remission auftreffender Sendelichtsignale erzeugt werden und sich zwischen dem Objekt und dem ersten Lichtempfänger (32.1) entlang eines Empfangslichtpfads ausbreiten, wobei der Sendelichtpfad und der Empfangslichtpfad koaxial zueinander verlaufen,
eine rotierende Umlenkeinheit (18), welche zur periodischen Umlenkung zumindest von jeweiligen Teilabschnitten des Sendelichtpfads und des Empfangslichtpfads eingerichtet ist,
eine Frontscheibe (24), welche zwischen der Umlenkeinheit (18) und dem Überwachungsbereich (10) angeordnet ist,
eine zweite Lichtquelle (12.2), welche zum Erzeugen von zweiten Sendelichtsignalen eingerichtet ist,
einen zweiten Lichtempfänger (32.2) zum Erfassen von zweiten Empfangslichtsignalen, die von einer auf der Frontscheibe (24) vorhandenen Verschmutzung (26) durch Remission auftreffender zweiter Sendelichtsignale erzeugt werden, und
eine Auswerteeinheit, welche zum Erfassen von Objekten auf der Grundlage der ersten Lichtsignale und zum Ermitteln eines Maßes einer Verschmutzung der Frontscheibe (24) auf der Grundlage der zweiten Lichtsignale eingerichtet ist,
**dadurch gekennzeichnet,**
**dass** die zweite Lichtquelle (12.2) derart benachbart zu der ersten Lichtquelle (12.1) angeordnet ist, dass die zweiten Sendelichtsignale unmittelbar oder direkt nach einem Formen durch die Sendeoptik (14) oder direkt nach einem Formen durch eine benachbart zu der Sendeoptik (14) angeordneten Zusatzsendeoptik (16) auf die Umlenkeinheit (18) auftreffen und von dieser in Richtung der Frontscheibe (24) umgelenkt werden.

2. Optoelektronischer Sensor (100, 200) nach Anspruch 1,
**dadurch gekennzeichnet,**
**dass** die erste Lichtquelle (12.1) und die zweite Lichtquelle (12.2) zumindest in einer Querrichtung bezüglich einer Hauptachse der Sendeoptik (14) voneinander beabstandet angeordnet sind.

3. Optoelektronischer Sensor (100, 200) nach Anspruch 2,
**dadurch gekennzeichnet,**
**dass** die erste Lichtquelle (12.1) und die zweite Lichtquelle (12.2) bezüglich der Hauptachse der Sendeoptik (14) zusätzlich auch in einer Längsrichtung voneinander beabstandet angeordnet sind.

4. Optoelektronischer Sensor (100, 200) nach Anspruch 2 oder 3,
**dadurch gekennzeichnet,**
**dass** die erste Lichtquelle (12.1) auf der Hauptachse der Sendeoptik (14) angeordnet ist.

5. Optoelektronischer Sensor (100, 200) nach einem der vorhergehenden Ansprüche,
**dadurch gekennzeichnet,**
**dass** die ersten Sendelichtsignale eine erste Wellenlänge und die zweiten Sendelichtsignale eine zweite, von der ersten Wellenlänge verschiedene Wellenlänge aufweisen, und
**dass** dem ersten Lichtempfänger (32.1) ein erster Filter vorgeordnet ist, welcher nur Licht mit der ersten Wellenlänge passieren lässt, und dem zweiten Lichtempfänger (32.2) ein zweiter Filter vorgeordnet ist, welcher nur Licht mit der zweiten Wellenlänge passieren lässt.

6. Optoelektronischer Sensor (100, 200) nach Anspruch 5,
**dadurch gekennzeichnet,**
**dass** ein Fremdlichtempfänger (38) vorgesehen ist, welcher dazu eingerichtet ist Lichtsignale aus Richtung des Überwachungsbereichs (10) und/oder der Frontscheibe (24) zu empfangen, wobei dem Fremdlichtempfänger (38) ein dritter Filter vorgeordnet ist, welcher Licht mit der ersten und zweiten Wellenlänge nicht passieren lässt.

7. Optoelektronischer Sensor (100, 200) nach einem der vorhergehenden Ansprüche,
**dadurch gekennzeichnet,**
**dass** der erste und/oder der zweite Lichtempfänger (32.1, 32.2) in der Ausbreitungsrichtung der ersten und/oder zweiten Empfangslichtsignale betrachtet hinter der ersten und der zweiten Lichtquelle (12.1, 12.2) angeordnet sind.

8. Optoelektronischer Sensor (100, 200) nach einem der vorhergehenden Ansprüche,
**dadurch gekennzeichnet,**
**dass** in der Ausbreitungsrichtung der ersten und/oder zweiten Empfangslichtsignale betrachtet hinter der Umlenkeinheit eine Empfangsoptik (34) angeordnet ist, welche dazu eingerichtet ist, die ersten und die zweiten Empfangslichtsignale zu formen.

9. Optoelektronischer Sensor (100, 200) nach Anspruch 8,
**dadurch gekennzeichnet,**
**dass** die Empfangsoptik (34) in der Ausbreitungsrichtung der ersten und/oder zweiten Empfangslichtsignale betrachtet hinter der ersten und zweiten Lichtquelle (12.1, 12.2) angeordnet ist.

10. Optoelektronischer Sensor (100, 200) nach Anspruch 8 oder 9,
**dadurch gekennzeichnet,**
**dass** in der Ausbreitungsrichtung der ersten und/oder zweiten Empfangslichtsignale betrachtet hinter der Empfangsoptik (34) und hinter dem zweiten Lichtempfänger (32.2) ein Faltspiegel (30) angeordnet ist, so dass ein Teil der von der Empfangsoptik (34) geformten ersten und zweiten Empfangssignale auf den zweiten Lichtempfänger (32.2) treffen und ein anderer Teil auf den Faltspiegel (30) treffen und von diesem in Richtung auf den ersten Lichtempfänger (32.1) umgelenkt werden.

11. Optoelektronischer Sensor (100, 200) nach Anspruch 10,
**dadurch gekennzeichnet,**
**dass** jeweilige lichtempfindliche Flächen des ersten und des zweiten Lichtempfängers (32.1, 32.2) einander zugewandt sind.

12. Optoelektronischer Sensor (100, 200) nach einem der Ansprüche 8 bis 11, **dadurch gekennzeichnet,**
**dass** der erste und der zweite Lichtempfänger (32.1, 32.2) auf der Hauptachse der Empfangsoptik (34) angeordnet sind.

13. Optoelektronischer Sensor (100, 200) nach einem der Ansprüche 8 bis 12,
**dadurch gekennzeichnet,**
**dass** dem zweiten Lichtempfänger (32.2) eine Zusatzempfangsoptik (36) vorgeordnet ist.

14. Optoelektronischer Sensor (100, 200) nach einem der vorhergehenden Ansprüche,
**dadurch gekennzeichnet,**
**dass** der erste und/oder der zweite Lichtempfänger (32.1, 32.2) in einer oder in zwei Dimensionen ortsauflösend ausgebildet sind.

15. Optoelektronischer Sensor (100, 200) nach einem der vorhergehenden Ansprüche,
**dadurch gekennzeichnet,**
**dass** die Auswerteeinheit dazu eingerichtet ist, eine Entfernung des erfassten Objekts von dem optoelektronischen Sensor (100, 200) in Abhängigkeit von der Lichtlaufzeit der ausgesendeten und empfangenen ersten Lichtsignale zu ermitteln.
